# EUROPEAN PATENT SPECIFICATION

(11) **EP 0 477 993 B1**
(45) Date of publication and mention of the grant of the patent: **13.07.1994**
(21) Application number: 91116885.4
(22) Date of filing: 25.01.1988
(51) Int. Cl.: A01B 29/04

(54) **Earth working apparatus**
Bodenbearbeitungsvorrichtung
Dispositif de travail de sol

(30) Priority: 26.01.1987 GB 8701606
(43) Date of publication of application: 01.04.1992
(62) Divisional of application: 88300587.8
(73) Proprietor: FLEXI-COIL (UK) LIMITED, York YO4 4NF (GB)
(72) Inventor: Bradley, John, Pocklington, York (GB)
(74) Representative: Needle, Jacqueline

(56) References cited:
- EP-A- 0 011 732
- DE-A- 2 818 718
- FR-A- 2 406 380
- FR-A- 2 488 768
- US-A- 2 300 851

## Description

The present invention relates to an earth working apparatus.

A number of forms of apparatus used for earth working include an elongate helical coil mounted on a frame for rotation about the longitudinal axis of the coil relative to the frame. In operation the coil rotates about a substantially horizontal axis by the effect of contact of the earth with the coil when the coil is dragged across the ground, for example by a tractor. The rotation of the coil may be used for example for crumbling the earth to provide a seed bed, or the apparatus may be used as a plough packer for consolidating the land after ploughing, again to provide a seed bed.

A difficulty with such coils is that in wet conditions earth clings to the coils, blocking the coils and reducing efficiency of operation. Previously known attempts to clean such a coil have been made by providing a fixed scraper bar parallel to the axis of the coil and positioned close to the periphery of the coil, so as to scrape off excess earth. However such attempts have been unsuccessful in adequately cleaning the helical turns of the coil.

US-A-2,300,851 (Wolfard) discloses an earth working apparatus comprising a frame, an elongate earth working rotary member mounted on the frame for rotation about the longitudinal axis of the rotary member in contact with the earth for the purposes of earth working; and means for cleaning the earth working rotary member. In this apparatus, the rotary member is a horizontal cylinder bearing a series of helical grooves about its outer surface. The cleaning means comprise a horizontal array of petalled wheels which mesh with the grooves in the cylinder, and appear to clean the cylinder by the tips of the petals digging dirt out of the grooves in the cylinder. Rotation of the grooved cylinder forces the petalled wheels to rotate by the effect of the grooves on the tips of the petals.

Other prior art which discloses means for cleaning earth working implements comprises US-A-396170 (Newson) US-A-2,261,893 (Wolfard) and US-A-1,237,446 (Arce).

It is an object of the present invention to provide means for cleaning an elongate helical coil in an earth working apparatus, particularly when operating in wet conditions, when the earth clings to the coil to an extent much greater than is the case with a simple grooved cylinder.

According to the present invention earth working apparatus as defined above is characterised in that the earth working rotary member comprises an elongate helical coil, and in that the cleaning means comprises a further elongate helical coil wound in the same direction as the first helical coil, the second helical coil being mounted by hanging from a central core member of the first helical coil inside the first helical coil, and being arranged such that portions of turns of the second helical coil protrude into spaces between the turns of said first helical coil.

Preferably the diameter of the second coil relative to the first is such that when hanging freely the lowermost part of the outer periphery of the second coil is substantially level with the lowermost part of the periphery of the first coil.

The said central core member of the first helical coil may comprise an axle which is fixed relative to the frame, on which the first coil rotates. Alternatively the central core member may be fixed relative to the first helical coil and may rotate therewith.

In a preferred form, the helical cleaning coil has the same pitch as the main helical coil. However, in other arrangements a multiple or a fraction of the pitch of the main helical coil may be used.

Although it is possible for the cleaning means to be driven in movement by drive means independent of the main helical coil, it is arranged in preferred forms of the invention that the said protruding portions of the cleaning means are moveable by the effect of contact of the protruding portions with the main helical coil. Thus, it is preferred that the said second helical coil is freely rotatable in itself, and in operation is moved by the effect of contact of turns of the first helical coil on turns of said second coil.

It is also preferred that the earth working coil is driven in rotation by the effect of contact with the ground as the coil is moved over the earth. Thus, at least in preferred embodiments of the invention, there may be provided a cleaning system for an earth working coil which is powered entirely by the movement of the earth working helical coil over the ground, and which allows thorough cleaning of the earth working coil by the protrusion of portions of the cleaning rotors into the spaces between the turns of the coil, by a scraping action due to direct contact of the cleaning means against the sides of the turns of the earth working coil.

An embodiment of the invention will now be described, by way of example, with reference to the accompanying drawings, in which:-
Figure 1 is a diagrammatic plan view of an earth working apparatus as described in EP-A-0280399;
Figure 2 is a view along the direction of movement of the apparatus, of an earth working apparatus embodying the present invention.

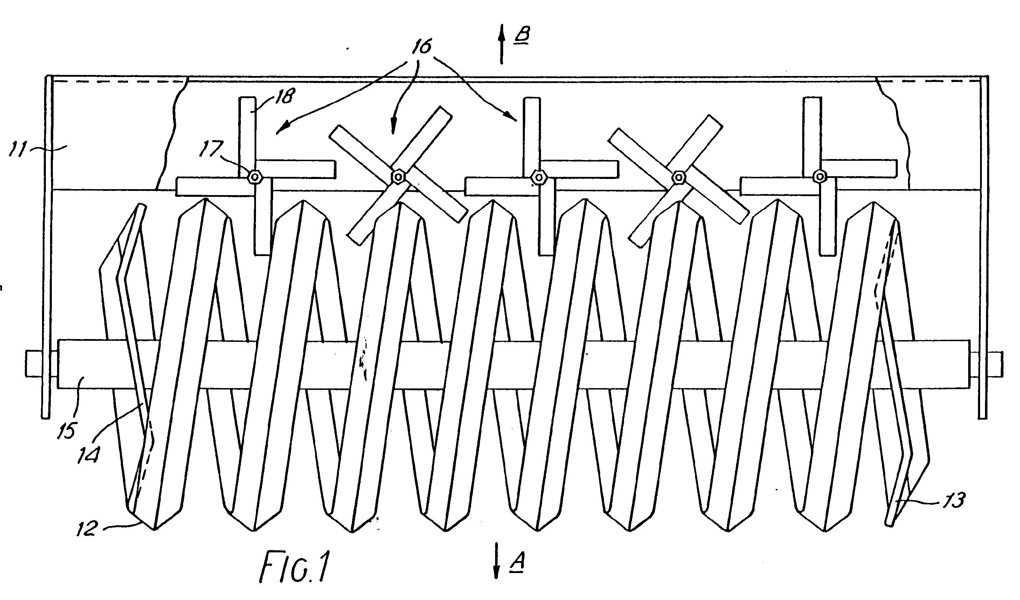

Figure 1 illustrates an earth working apparatus which is described and claimed in our co-pending application EP-A-0280399. This apparatus is described herein simply for ease and convenience in describing the apparatus of the present invention. The apparatus shown in Figure 1 comprises a frame 11 arranged to be mounted on a vehicle, for example at the rear of a tractor, for movement over the land in the direction A or the direction B as indicated by arrows in Figure 1. The preferred direction of movement is direction A, but the positioning of the moving components is that which would arise for movement in the direction B.

A helical coil 12 is mounted by end plates 13 and 14 on a central core 15 which is journalled for rotation about the axis of the coil 12. The coil 12 may be of conventional design, for example a 1.5 inch square steel bar wound along a helix having a pitch of 5.5 inches. In operation the coil 12 is rotated by the effect of the coil being dragged over the ground by the tractor.

Mounted on the frame 11 is an array of cleaning rotors 16 each of which is rotatable about a respective bolt 17 by which the rotor is mounted on the frame 11. Each rotor 16 comprises four arms 18 extending outwardly from the bolt 17, but off-set slightly from the radial position, so as to be substantially tangential to the axis of rotation of the rotor.

Each rotor 16 is freely rotatable on its bolt 17, and the arms 18 protrude into the spaces between turns of the helical coil 12.

In operation, rotation of the helical coil 12 causes the turns of the coil 12 to make contact with the arms 18 of the rotors 16, and the coil is cleaned by the scraping action of the arms 18 on the sides of the turns of the coil 12. As the coil 12 rotates in effect the spaces between the turns of the coil move longitudinally along the coil, and the rotors 16 are rotated by the effect of contact of the turns of the coil 12 on the arms 18.

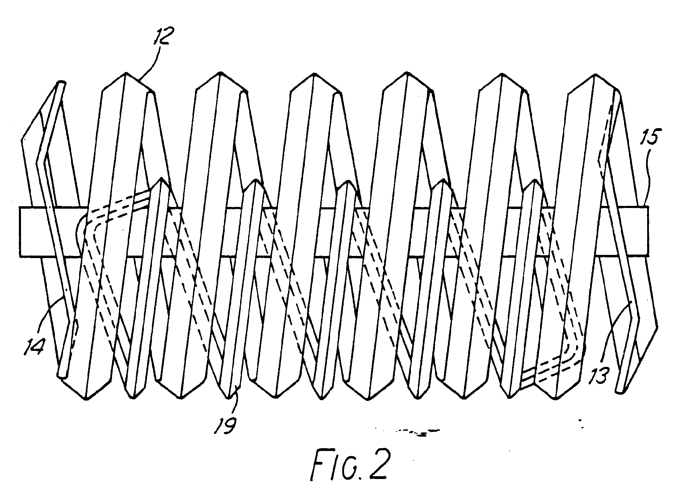

In Figure 2 there is shown earth working apparatus embodying the present invention. As in the apparatus illustrated in Figure 1, the earth working apparatus includes an elongate helical coil 12 mounted by end plates 13 and 14 on a central core 15, which is mounted for rotation on a mobile frame (not shown). The construction of the earth working coil 12 may be the same as has been described with reference to Figure 1.

Means for cleaning the coil 12 comprises a further helical coil 19 which is of the same pitch as the earth working coil 12, but of smaller diameter, and which is positioned inside the periphery of the earth working coil 12. The cleaning coil 19 is hung freely from the central core 15 of the coil 12.

In operation the rotation of the earth working coil 12 bring the sides of the turns of the coil 12 into scraping contact with the sides of the turns of the cleaning coil 19, and thus effects a cleaning action of the earth working coil 12. The cleaning coil 19 is rotated by the effect of contact with the earth working coil 12. Portions of the cleaning coil 19 protrude into the spaces between the turns of the earth working coil 12, and these protruding portions in effect move longitudinally along the length of the earth working coil 12, to take account of the movement of the turns of the coil 12 along the said longitudinal direction.

## Claims

1. An earth working apparatus comprising a frame (11), an elongate earth working rotary member (12) mounted on the frame (11) for rotation about the longitudinal axis of the rotary member (12) in contact with the earth for the purposes of earth working; and means (19) for cleaning the earth working rotary member (12), characterised in that the earth working rotary member comprises an elongate helical coil (12), and in that the cleaning means comprises a further elongate helical coil (19) wound in the same direction as the first helical coil (12), the second helical coil (19) being mounted by hanging from a central core member (15) of the first helical coil (12) inside the first helical coil (12), and being arranged such that portions of turns of the second helical coil (19) protrude into spaces between the turns of said first helical coil (12).

2. Apparatus according to Claim 1, wherein the diameter of said second coil (19) relative to the first coil (12) is such that when hanging freely the lowermost part of the outer periphery of the second coil (19) is substantially level with the lowermost part of the periphery of the first coil (12).

3. Apparatus according to Claim 1 or 2, in which the pitch of the second coil (19) is the same as the pitch of said first coil (12).

4. Apparatus according to any preceding claim, in which the said central core member (15) of the first helical coil (12) comprises an axle (15) which is fixed relative to the frame, on which the first coil rotates.

5. Apparatus according to any of Claims 1 to 3, in which the central core member (15) is fixed relative to the first helical coil (12) and rotates therewith.

6. Apparatus according to any preceding claim, in which said second helical coil is freely rotatable in itself, an in operation is moved by the effect of contact of turns of the first helical coil on turns of said second coil.

## Patentansprüche

1. Bodenbearbeitungsvorrichtung mit einem Rahmen (11), einem länglichen drehenden Bodenbearbeitungsteil (12), das an dem Rahmen (11) für eine Rotation um die Längsachse des drehenden Teiles (12) in Kontakt mit dem Boden, um diesen zu bearbeiten, angebracht ist; und einer Einrichtung (19) zum Reinigen des drehenden Bodenbearbeitungsteils (12), dadurch gekennzeichnet; daß das drehende Bodenbearbeitungsteil eine längliche Wendel (12) aufweist und daß die Reinigungseinrichtung eine weitere längliche Wendel (19) aufweist, die in derselben Richtung wie die erste Wendel (12) gewunden ist, wobei die zweite Wendel (19) angebracht ist, indem sie von einem zentralen Kernelement (15) der ersten Wendel (12) in der ersten Wendel (12) hängt, und so angeordnet ist, daß Windungsabschnitte der zweiten Wendel (19) in Vertiefungen zwischen den Windungen der ersten Wendel (12) vorstehen.

2. Vorrichtung nach Anspruch 1, bei der der Durchmesser der zweiten Wendel (19) im Verhältnis zu der ersten Wendel (12) dergestalt ist, daß, wenn sie frei hängt, der unterste Teil des äußeren Umfangs der zweiten Wendel (19) im wesentlichen auf gleicher Höhe mit dem untersten Teil des Umfangs der ersten Wendel (12) ist.

3. Vorrichtung nach Anspruch 1 oder 2, bei der die Gewindesteigung der zweiten Wendel (19) die gleiche ist wie die der ersten Wendel (12).

4. Vorrichtung nach einem der vorhergehenden Ansprüche, bei der das zentrale Kernelement (15) der ersten Wendel (12) eine Achse (15) aufweist, die relativ zu dem Rahmen fest ist, auf der sich die erste Wendel dreht.

5. Vorrichtung nach einem der Ansprüche 1 bis 3, bei der das zentrale Kernelement (15) relativ zu der ersten Wendel (12) fest ist und mit dieser rotiert.

6. Vorrichtung nach einem der vorhergehenden Ansprüche, bei der die zweite Wendel in sich selbst frei drehbar ist und beim Betrieb durch die Kontaktwirkung von Windungen der ersten Wendel auf die Windungen der zweiten Wendel bewegt wird.

## Revendications

1. Appareil de travail du sol comprenant un chassis (11), un élément rotatif allongé (12) de travail du sol monté sur le chassis (11) pour tourner autour de l'axe longitudinal de l'élément rotatif (12) en contact avec le sol en vue du travail du sol; et des moyens (19) pour nettoyer l'élément rotatif de travail du sol (12), carctérisé en ce que l'élément rotatif de travail du sol comprend une bobine hélicoïdale allongée (12) et en ce que les moyens de nettoyage comprennent une autre bobine hélicoïdale allongée (19) enroulée dans la même direction que la première bobine hélicoïdale (12), la seconde bobine hélicoïdale (19) étant montée par suspension à partir d'un élément de noyau central (15) de la première bobine hélicoïdale (12) à l'intérieur de la première bobine hélicoïdale (12) et étant disposée de telle manière que des parties de spires de la seconde bobine hélicoïdale (19) font saillie dans des espaces se trouvant entre les spires de ladite première bobine hélicoïdale (12).

2. Appareil selon la revendication 1, dans lequel le diamètre de ladite seconde bobine (19) est tel, par rapport à la première bobine, que, lorsqu'elle est suspendue librement, la partie la plus basse de la périphérie extérieure de la seconde bobine (19) est substantiellement de niveau avec la partie la plus basse de la périphérie de la première bobine (12)

3. Appareil selon la revendication 1 ou 2, dans lequel le pas de la seconde bobine (19) est le même que le pas de ladite première bobine (12)

4. Appareil selon l'une quelconque des revendications précédentes, dans lequel ledit élément de noyau central (15) de la première bobine hélicoïdale (12) oomprend un axe (15) qui est fixe par rapport au chassis sur lequel tourne la première bobine.

5. Appareil selon l'une quelconque des revendications 1 à 3, dans lequel l'élément de noyau central (15) est fixe par rapport à la première bobine hélicoïdale (12) et tourne avec elle.

6. Appareil selon l'une quelconque des revendications précédentes, dans lequel ladite seconde bobine hélicoïdale est montée à rotation libre et, en fonctionnement, est mise en mouvement par l'effet du contact des spires de la première bobine hélicoïdale avec les spires de ladite seconde bobine.
